# EUROPEAN PATENT SPECIFICATION

(11) **EP 1 700 373 B1**
(45) Date of publication and mention of the grant of the patent: **13.07.2011**
(21) Application number: 04801502.8
(22) Date of filing: 08.12.2004
(51) Int. Cl.: H02P 7/292, H02P 7/295, H02M 7/10

(54) **ROTATION SPEED CONTROL CIRCUIT**
DREHGESCHWINDIGKEITS-STEUERSCHALTUNG
CIRCUIT DE COMMANDE DE VITESSE DE ROTATION

(30) Priority: 09.12.2003 TR 200302116
(43) Date of publication of application: 13.09.2006
(73) Proprietor: Arçelik Anonim Sirketi, 34950 Istanbul (TR)
(72) Inventor: TEZDUYAR, Latif Arcelik Anonim Sirketi, 34950 Istanbul (TR); SONMEZOZ, Fehmi Arcelik Anonim Sirketi, 34950 Istanbul (TR); ERENAY, H. Kerem Arcelik Anonim Sirketi, 34950 Istanbul (TR)
(86) International application number: PCT/IB2004/052712
(87) International publication number: WO 2005/057776

(56) References cited:
- DE-A1- 4 040 359
- US-A- 4 588 917
- US-A1- 2002 012 255
- PATENT ABSTRACTS OF JAPAN vol. 014, no. 424 (M-1024), 12 September 1990 (1990-09-12) & JP 02 167678 A (NIPPON ELECTRIC IND CO LTD), 28 June 1990 (1990-06-28)
- PATENT ABSTRACTS OF JAPAN vol. 2000, no. 02, 29 February 2000 (2000-02-29) & JP 11 313487 A (SANYO ELECTRIC CO LTD), 9 November 1999 (1999-11-09)

## Description

This invention relates to a rotation speed control circuit that derives the rotation speed of electrical motors.

Based on their application and purpose, universal motors can be either alternative current (AC) or direct current (DC) derived; by preference for household appliances, such as for washing machines where high rinse rotation speed is required, Universal DC motors which are suitable for operating at high power in terms of life and noise level equipment like brush and collector, are preferred. In the current state of art Universal motors used reach a high rotation speed by methods which affect optimal material use and which regulate motor rotation speed by stator coils that generate magnetic fields for a low and high rotation speed. Another method for operating the motor at a high rotation speed is to increase the operating voltage of the motor by Voltage Doubler (VD) method. Average DC voltage which is created after directing alternative current by a rectifier diode bridge and which provides motor to be driven, is adjusted by means of a semi-conductor switch called IGBT (Insulated Gate Bipolar Transistor). As a result of applying both this method which is referred to as the DC chopper Technique and Voltage Doubler (VD) technique, as a result of the high input power consumed from the network, compliance to harmonic standards rises as an issue. For the DC chopper technique, IGBT component and other circuit components needs to be appropriately dimensioned or selected to resist high voltages, which in turn affects the cost and operation productivity negatively.

In German Patent document DE 4305477, a motor rotation speed control circuit, which by doubling DC universal motor's operating voltage at least doubles the motor's operating rotation speed by means of an electronic control device, is described.

The Japanese document JP02167678 describes a phase control circuit for adjusting the speed of a DC motor by controlling the AC imput voltage to a rectifier through a valable resistor, a diode bridge, capacitors, resistors, a DIAC and a TRIAC.

The aim of this invention is the realization of a low cost motor rotation speed control circuit which lowers at most the life and noise problems encountered when operating DC universal motors at a high rotation speed. This object is solved by the features of claim 1. The dependent claims recite advantageous embodiments of the invention.

The motor rotation speed control circuit realized in order to attain the object of this invention has been illustrated in the attached figures, where:

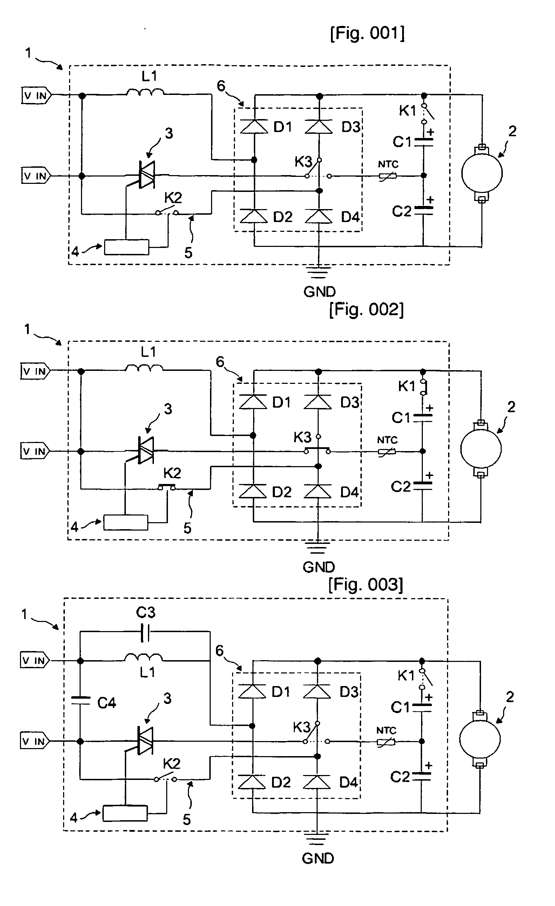

- Fig 1: is a schematic view of a motor rotation speed control circuit at normal rotation speed state.
- Fig 2: is a schematic view of a motor rotation speed control circuit at high rotation speed state.
- Fig 3: is a schematic view of a motor rotation speed control circuit which includes a smoothing capacitor connected between the nodes of network voltage and a smoothing capacitor which is connected in parallel to an inductance.

The components are shown in the figures have been numbered individually and listed below.
1- Motor rotation speed control circuit
2- DC electrical motor
3- Triac
4- Control unit
5- By-pass line
6- Rectifier diode bridge

In the household appliances, preferably washing machines, the rotation speed of a DC electrical motor (2) used is controlled by a motor rotation speed control circuit (1).

Motor rotation speed control circuit (1) comprises, a rectifier diode bridge (6) which is formed by diodes (D1, D2, D3, D4) rectifying the network voltage, an inductance (L1) which filters the current by not loosing any power, a smoothing capacitor (C1) which is charged by the positive peak voltage of the alternative current, a smoothing capacitor (C2) connected in series to the C 1 capacitor and charged with the negative peak voltage of the alternative current, a triac (3) which enables both way transition for both alternances of the voltage; which is located between the negative alternance of the network and node points of the capacitors (C1, C2); and which controls the AC voltage in order to provide smoothing capacitors (C1, C2) to be charged with desired voltage values, and a current limiter (NTC) which is located between the node points of the capacitors (C1, C2) and the triac (3) and which limits the charging current.

The positive alternance of the network charges C1 capacitor which is located on the DC link over the inductance (L1) and the D1 diode with a peak voltage. On the other hand, the negative peak voltage of the network charges C2 capacitor again according to the peak voltage over triac (3), current limiter (NTC) and D2 diode. Depending on the current consumed by the DC motor ideally on the DC link, a value almost "2 x network peak voltage" is generated. As a result of the motor charged, since it is practically impossible to apply a capacitor with infinitely high value, this value would evidently decrease. For instance, for a 220 V network state 2 x peak voltage value could reach around over 600 V. Since this mentioned voltage value is for practical approach never necessary, is adjusted to the desired value by means of the triac (3).

Motor rotation speed control circuit (1) comprises a control unit (4) which triggers the triac (3) in order to provide capacitors (C1, C2) to be charged with voltage values lower than the maximum peak values sourced from the network for operating the electrical motor (2) at the desired rotation speed. The control unit (4) and triac (3), considering the fact that the motor at high rotation speed would operate at voltages like 400-450 V which are lower than 2 x peak voltage value, is adjusted according to capacitive charge feed, different than a phase difference of a 90 degree ignition angle.

Motor rotation speed control circuit (1), comprises a by-pass line (5) which by-passes the triac (3), which is connected between the D3 and D4 diodes, which functions as a return way for the current as the triac, operating on/off periods, is turned off, and which provides capacitors (C1, C2) to be charged stabilized. Moreover, the by-pass line (5) provides minimization of electrical stresses or constrains over rotation speed control circuit (1).

Motor rotation speed control circuit (1), comprises a relay (K1) which is connected in series with capacitors (C1, C2), which only to succeed the Voltage Doubler (VD) function at high motor rotation speed is), a relay (K2) located over the by-pass line (5) and a relay (K3) located between the triac (3) and capacitors (C1, C2) which are triggered by the control unit (4).

Control unit (4) provides capacitors (C1, C2) to be charged only at a high motor rotation speed by triggering relays (K1, K2, K3) at the same time when the DC electrical motor rotation speed is altered, and to be kept out of circuit at normal rotation speed. In this way motor rotation speed control circuit (1), applies the phase control only by rectifying the network voltage in normal motor rotation speed, but it (1) performs both phase control and Voltage doubler (VD) functions together at high rotation speed.

Both K1 and K2 relays are non-contact at normal rotation speed of the DC electrical motor (2), and contact at high rotation speed of the DC electrical motor (2). K3 relay; however, at normal rotation speed of DC electrical motor (2) is short-circuited to the D3 and D4 diodes of node points, and is contact between the triac (3) and capacitors (C1, C2) at high rotation speed of the DC electrical motor (2).

In another application of the invention, the motor rotation speed control circuit (1) comprises a capacitor (C3) which provides protection against undesired charges and which is connected to the inductance (L1) in parallel, and/or a capacitor (C4) which is connected to both nodes of the network voltage.

With the motor rotation speed control circuit (1), being the subject of the invention, preferably in the case of washing machines, the DC electrical motor (2) used for propelling the drum operates at a normal rotation speed during the washing cycle, at a high speed during pressing cycle, and in compliance with harmonic standards. Within the limits of amplitude and duration of the consumed current, by lowering at most the brush-collector current, improving in terms of life and noise level is provided. Moreover, for network voltages lower than normal values, it would be possible for the DC electrical motor (2) to reach a high rotation speed without any problems.

## Claims

1. A motor rotation speed control circuit (1) that controls the rotation speed of a DC electrical motor(2) comprising a rectifier diode bridge (6) that is formed by diodes (D1, D2, D3, D4) that rectify the network voltage; a smoothing capacitor (C1) that is charged by the positive peak voltage of alternativing current and a smoothing capacitor (C2) that is connected in series to the smoothing capacitor (C1) and that is charged with the negative peak voltage of the alternativing current; a triac (3) which controls the AC voltage in order to provide these smoothing capacitors (C1, C2) to be charged with desired voltage values;
**characterized in that** the triac (3) is selectively connected either to the common node of the rectifier diodes (D3, D4) for operation at normal rotation speed, or to the common node of the capacitors (C1, C2) for operation at high rotation speed; and a control unit (4) which triggers the triac (3) in order to supply the smoothing capacitors (C1, C2) to charge with voltage values lower than the maximum peak voltage values to be sourced from the network.

2. A motor rotation speed control circuit (1) as stated in Claim1, **characterized by** a by-pass line (5) that by-passes the triac (3) and as the triac (3) functions at on-off periods when it is off which functions as a return way for the current and which provides smoothing capacitors (C1, C2) to be charged balanced.

3. A motor rotation speed control circuit (1) as stated in Claim1, **characterized by** a relay (K1) connected in series to the smoothing capacitors (C1, C2), a relay (K2) located over the by-pass line (5) and a relay (K3) which is between the triac (3) and smoothing capacitors (C1. C2) which are triggered by a control unit (4) to only function as Voltage Doubler (VD) at high motor rotation speed.

4. A motor rotation speed control circuit (1) as stated in above mentioned claims, **characterized by** a smoothing capacitor (C3) that protects from undesired charges and that is connected in parallel with inductance (L1) and/or a smoothing capacitor (C4) which is connected between both nodes of the network voltage.

## Patentansprüche

1. Motordrehzahlsteuerschaltkreis (1), der die Drehzahl eines elektrischen Gleichstrommotors (2) steuert, umfassend eine Gleichrichterdiodenbrücke (6), die von Dioden (D1, D2, D3, D4) gebildet ist, die die Netzwerkspannung gleichrichten; einen Glättungskondensator (C1), der von der positiven Spitzenspannung von Wechselstrom aufgeladen wird, und ein Glättungskondensator (C2), der in Serie mit dem Glättungskondensator (C1) verbunden ist und der mit der negativen Spitzenspannung des Wechselstroms aufgeladen wird, einen Triac (3), der die Wechselspannung steuert, damit diese Glättungskondensatoren (C1, C2) mit gewünschten Spannungswerten aufgeladen werden; **dadurch gekennzeichnet, dass** der Triac (3) selektiv entweder mit dem gemeinsamen Knoten der Gleichrichterdioden (D3, D4) für einen Betrieb bei normaler Drehzahl oder mit dem gemeinsamen Knoten der Kondensatoren (C1, C2) für einen Betrieb bei hoher Drehzahl verbunden wird, und eine Steuereinheit (4), die den Triac (3) auslöst, um die Glättungskondensatoren (C1, C2) zu versorgen und sie mit Spannungswerten aufzuladen, die niedriger sind als die maximalen Spitzenspannungswerte, die aus dem Netz gezogen werden.

2. Motordrehzahlsteuerschaltkreis (1) nach Anspruch 1, **gekennzeichnet durch** eine Umgehungsleitung (5), die den Triac (3) umgeht, wenn der Triac (3) ausgeschaltet ist und er in Ein-Aus-Perioden arbeitet, was als ein Rückweg für den Strom dient und was dafür sorgt, dass die Glättungskondensatoren (C1, C2) in ausgeglichener Weise aufgeladen werden.

3. Motordrehzahlsteuerschaltkreis (1) nach Anspruch 1, **gekennzeichnet durch** ein Relais (K1), das in Serie mit den Glättungskondensatoren (C1, C2) verbunden ist, ein Relais (K2), das an der Umgehungsleitung (5) angeordnet ist, und ein Relais (K3), das zwischen dem Triac (3) und den Glättungskondensatoren (C1, C2) angeordnet ist, die von einer Steuereinheit (4) ausgelöst werden, um bei hoher Motordrehzahl nur als Spannungsverdoppler (VD) zu arbeiten.

4. Motordrehzahlsteuerschaltkreis (1) nach einem der vorstehenden Ansprüche, **gekennzeichnet durch** einen Glättungskondensator (C3), der vor unerwünschten Aufladungen schützt und der parallel mit Induktanz (L1) und/oder einem Glättungskondensator (C4) verbunden ist, der zwischen beiden Knoten der Netzspannung verbunden ist.

## Revendications

1. Un circuit de contrôle de vitesse de rotation de moteur (1) qui contrôle la vitesse de rotation d'un moteur électrique à courant continu (2) comprenant un pont de diodes de redressement (6) qui est formé par des diodes (D1, D2, D3, D4) qui redressent la tension d'alimentation ; un condensateur de filtrage (C1) qui est chargé par la tension de crête positive du courant alternatif et un condensateur de filtrage (C2) qui est relié en série au condensateur de filtrage (C1) et qui est chargé par la tension de crête négative du courant alternatif, un triac (3) qui contrôle la tension alternative afin de permettre ces condensateurs de filtrage (C1, C2) d'être chargés avec les valeurs de tension désirée ; **caractérisé en ce que** le triac (3) est relié sélectivement soit au noeud commun des diodes de redressement (D3, D4) pour le fonctionnement à la vitesse de rotation normale, soit au noeud commun des condensateurs (C1, C2) pour le fonctionnement à la haute vitesse de rotation, et une unité de contrôle (4) qui déclenche le triac (3) afin de charger les condensateurs de filtrage (C1, C2) avec des valeurs de tension inférieures aux valeurs maximales de tension de crête que le réseau d'alimentation fournies.

2. Un circuit de contrôle de vitesse de rotation de moteur (1) selon la Revendication 1, **caractérisé par** une ligne de dérivation (5) qui dérive le triac (3) et car le triac (3) fonctionne aux intervalles marche-arrêt, lorsqu'il est éteint, qui fonctionne comme un chemin de retour pour le courant et qui permet aux condensateurs de filtrage (C1, C2) d'être chargés d'une manière équilibrée.

3. Un circuit de contrôle de vitesse de rotation de moteur (1) selon la Revendication 1, **caractérisé par** un relai (K1) relié en série aux condensateurs de filtrage (C1, C2), un relai (K2) disposé sur la ligne de dérivation (5) et un relai (K3) qui est entre le triac (3) et les condensateurs de filtrage (C1, C2) qui sont déclenchés par une unité de contrôle (4) pour fonctionner comme un Doubleur de Tension (VD) à la haute vitesse de rotation de moteur.

4. Un circuit de contrôle de vitesse de rotation de moteur (1) selon l'une quelconque des revendications précédentes, **caractérisé par** un condensateur de filtrage (C3) qui protège contre les charges non désirés et qui est relié en parallèle à une inductance (L1) et/ou un condensateur de filtrage (C4) qui est relié entre les deux noeuds de la tension d'alimentation.
